# EUROPÄISCHE PATENTSCHRIFT

(11) **EP 3 416 804 B1**
(45) Veröffentlichungstag und Bekanntmachung des Hinweises auf die Patenterteilung: **15.12.2021**
(21) Anmeldenummer: 17704777.6
(22) Anmeldetag: 14.02.2017
(51) Int. Cl.: B29C 49/42, B29C 49/64, B29C 49/06, B29L 31/00

(54) **HEIZVORRICHTUNG ZUR THERMISCHEN KONDITIONIERUNG VON FÜR DIE BLASFORMUNG VORGESEHENEN VORFORMLINGEN**
HEATING DEVICE FOR THERMALLY CONDITIONING PREFORMS FOR BLOW MOLDING
DISPOSITIF DE CHAUFFAGE POUR LE CONDITIONNEMENT THERMIQUE DE PRÉFORMES DESTINÉES AU MOULAGE PAR SOUFFLAGE

(30) Priorität: 15.02.2016 DE 102016001630
(43) Veröffentlichungstag der Anmeldung: 26.12.2018
(73) Patentinhaber: KHS Corpoplast GmbH, 22145 Hamburg (DE)
(72) Erfinder: MEYER, Niels, 22869 Schenefeld (DE); LEWIN, Frank, 22889 Tangstedt (DE); ULUTÜRK, Deniz, 22761 Hamburg (DE)
(74) Vertreter: Eisenführ Speiser
(86) Internationale Anmeldenummer: PCT/EP2017/053251
(87) Internationale Veröffentlichungsnummer: WO 2017/140660

(56) Entgegenhaltungen:
- WO-A1-2015/181738
- AT-U1- 520
- DE-U1- 20 311 657
- FR-A1- 2 950 283
- FR-A1- 2 950 284
- US-A- 5 066 222
- US-A1- 2004 161 486
- US-B2- 7 121 821

## Beschreibung

Die Erfindung betrifft eine Heizvorrichtung zur thermischen Konditionierung von für die Blasformung vorgesehenen Vorformlingen nach dem Oberbegriff des Anspruchs 1 und eine Blasmaschine nach Anspruch 12. Weiterhin betrifft die Erfindung die Verwendung einer solchen Heizvorrichtung für die Temperierung von Vorformlingen.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine, also innerhalb einer Vorrichtung zur blasumformenden Herstellung von Fertigbehältern aus Vorformlingen, unterschiedlichen Bearbeitungsstationen zugeführt. Typischerweise weist eine derartige Blasformungsmaschine bzw. Blasmaschine eine Aufheizvorrichtung sowie eine Blaseinrichtung auf, in deren Bereich der zuvor in der Aufheizvorrichtung temperierte Vorformling durch biaxiale Orientierung zu einem Behälter expandiert wird. Die Expansion erfolgt z.B. mit Hilfe von Druckluft, die in den zu expandierenden Vorformling eingeleitet wird. Der verfahrenstechnische Ablauf bei einer derartigen Expansion des Vorformlings wird in der DE 4340291 A1 erläutert.

Die Einleitung des unter Druck stehenden Gases umfasst auch die Druckgaseinleitung in die sich entwickelnde Behälterblase sowie die Druckgaseinleitung in den Vorformling zu Beginn des Blasumformvorganges bzw. Blasvorganges. Es sind auch andere Fluide zur Blasformung verwendbar, insbesondere auch die Verwendung des in den Behälter abzufüllenden Füllgutes. Die nachfolgende allgemeine Beschreibung erfolgt gleichwohl am Beispiel einer mit Druckgas arbeitenden Blasmaschine, ohne dass sich die Erfindung auf solche Blasmaschinen beschränkt.

Der grundsätzliche Aufbau einer Blasstation zur Behälterformung wird in der DE 4212583 A1 beschrieben. Möglichkeiten zur Temperaturkonditionierung der Vorformlinge werden in der DE 2352926 A1 erläutert. Auf die genannten Schriften wird explizit Bezug genommen und insofern erübrigt sich eine weitere Beschreibung zu Blasstationen und zur Temperaturkonditionierung.

Innerhalb der Vorrichtung zur Blasformung können die Vorformlinge sowie die geblasenen Behälter mit Hilfe unterschiedlicher Transport- und Handhabungseinrichtungen transportiert werden. Bekannt ist z.B. die Verwendung von Transportdornen, an denen die Vorformlinge zum Transport gehaltert sind. Die Vorformlinge können aber auch mit anderen Trageinrichtungen gehandhabt und transportiert werden. Die Verwendung von Greifzangen zur Handhabung und zum Transport von Vorformlingen und die Verwendung von Klemmdornen, die zur Halterung in einen Mündungsbereich des Vorformlings einführbar sind, gehören ebenfalls zu den verfügbaren Konstruktionen.

Ein Transport und eine Handhabung von Behältern und Vorformlingen unter Verwendung von Übergaberädern wird beispielsweise in der DE 199 06 438 A1 bei einer Anordnung eines Übergaberades zwischen einem Blasrad und einer Ausgabestrecke und eines weiteren Übergaberades zwischen der Heizstrecke und dem Blasrad beschrieben.

Die bereits erläuterte Handhabung der Vorformlinge erfolgt zum einen bei den sogenannten Zweistufenverfahren, bei denen die Vorformlinge zunächst in einem Spritzgussverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgusstechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, nämlich auf einem sogenannten Blasrad, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Vor einer Durchführung der Beheizung werden die Vorformlinge typischerweise auf Transportdorne aufgesteckt, die den Vorformling entweder durch die gesamte Blasmaschine transportieren oder die lediglich im Bereich der Aufheizvorrichtung umlaufen. Bei einer stehenden Beheizung der Vorformlinge derart, dass die Mündungen der Vorformlinge in lotrechter Richtung nach unten orientiert sind, werden die Vorformlinge üblicherweise auf ein hülsenförmiges Halterungselement des Transportdornes aufgesteckt. Bei einer hängenden Beheizung der Vorformlinge, bei der diese mit ihren Mündungen in lotrechter Richtung nach oben orientiert sind, werden in der Regel Spreizdorne in die Mündungen der Vorformlinge eingeführt, die die Vorformlinge festklemmen. Aus dem Stand der Technik sind sowohl aktive, steuerbare als auch passive Klemmelemente bekannt.

Passive Klemmelemente bewirken z.B. eine Klemmung aufgrund einer einwirkenden Federkraft, gegen die die Vorformlinge auf die Transportdorne aufgesteckt werden oder gegen die die Vorformlinge vom Transportdorn abgenommen werden, während bei den aktiven Transportdornen eine Betätigung erfolgen muss, z.B. aktorisch oder z.B. durch eine externe Kurvensteuerung, die den Klemmmechanismus auslöst bzw. den Klemmeingriff wieder aufhebt.

Zur Verkürzung der erforderlichen Aufheizzeit ist es bekannt, im Bereich der Heizstrecke NIR-Strahler zu verwenden, deren Heizstrahlung in einem nahen Infrarotbereich emittiert wird, typischerweise mit Wellenlängen zwischen 0,4 und 1 Mikrometer. Die Aufheizung der Vorformlinge erfolgt dabei primär durch Strahlungsabsorption beim Durchgang der NIR-Strahlung durch das Vorformlingsmaterial. Zur Optimierung der Energieausbeute werden derartige Heizstrecken mit einer Vielzahl von Spiegelflächen ausgestattet, um eine Absorption der Wärmestrahlung durch Bauteile der Heizstrecke möglichst zu vermeiden oder zumindest stark zu reduzieren, und um die NIR-Strahlung erneut zum Heizen auf den Vorformling zu reflektieren.

Typischerweise werden die Heizstrecken zumindest bereichsweise tunnelartig ausgebildet, und sie sind dazu z.B. auf der einen Seite vom Gehäuse einer Halterung für die Heizelemente sowie auf der gegenüberliegenden Seite von einem diesem Gehäuse gegenüberliegenden Reflektor begrenzt, nachfolgend als Gegenreflektor bezeichnet. In vertikaler Richtung kann eine Begrenzung durch einen Boden und/oder einen Deckel erfolgen, je nachdem, ob die Vorformlinge mit ihren Mündungen in lotrechter Richtung nach oben oder nach unten orientiert durch die Heizstrecke hindurch transportiert werden. Auch diese vertikalen Begrenzungen können als Reflektoren ausgebildet werden. Es ist zudem üblich, den Mündungsbereich des Vorformlings z.B. mittels mitlaufender Reflektoren, nachfolgend als Mündungsreflektoren bezeichnet, gegen erwärmende Strahlung zu schützen, da dieser Bereich bereits fertig ausgeprägt hergestellt ist und bei der Blasformung keine weitere Verformung erfahren soll.

Ein Prozessschritt bei der Blasformung von Behältern höchster Bedeutung ist die Ausbildung eines definierten Temperaturprofils während des sich der biaxialen Expansion des Behälters zuvorkommenden Aufheizvorgangs. Anhand des beim Heizprozess in das Wandmaterial des Vorformlings eingeprägten Temperaturprofils bestimmen sich wesentliche Prozessparameter für die in der Blasstation durchgeführte biaxiale Ausdehnung des Vorformlings. Beispielsweise werden durch das Temperaturprofil die maximale Geschwindigkeit einer in den Vorformling eingeführten Reckstange und die maximale Expansionsgeschwindigkeit der Behälterblase bei der Druckbeaufschlagung des Vorformlings bestimmt. Höhere Geschwindigkeiten führen zu größeren Durchsatzraten und damit zur Effizienzsteigerung der Blasmaschine.

Um hohe Geschwindigkeiten bei der Blasumformung zu ermöglichen, ist die Ausbildung eines besonders gut definierten Temperaturprofils vonnöten. Zur Reduzierung von Ausschuss durch fehlerhaft expandierte Vorformlinge ist eine konstante Qualität des Temperaturprofils gewünscht. Es besteht also die Bestrebung, ein möglichst gleichbleibend gut definiertes Temperaturprofil bei der Aufheizung der Vorformlinge herzustellen.

Ein hoher Durchsatz von Vorformlingen durch eine der Blasstation vorgelagerte Aufheizvorrichtung bedingt einen hohen Strombedarf, damit ausreichend thermische Energie in die Vorformlingskörper in kurzer Zeit eingetragen werden kann. Der Strombedarf wird durch Wärmeverluste beim Heizprozess unnötig gesteigert. Verluste thermischer Energie entstehen beispielsweise durch Absorption von Wärmestrahlung an Bauteilen der Heizvorrichtung oder durch Strahlungsverlust durch in der Heizvorrichtung technisch bedingte Öffnungen zur Umgebung. Es besteht die Bestrebung, den Energieaufwand möglichst gering zu halten.

Spürbare Wärmeverluste im Bereich der Aufheizvorrichtung entstehen insbesondere durch das Entweichen von Wärmestrahlung durch Lücken zwischen den an Transportdornen getragenen Vorformlingen. Zur Lösung dieses Problems werden typischer Weise die Lücken teilweise schließende Lochblenden verwenden, wobei die Vorformlinge durch die Bohrung der Lochblenden aufgenommen und während des Transports entlang der Heizstrecke in einer in die Lochblende eingetauchten Position gehalten werden. Derartige Lösungen sind zum Beispiel aus DE 10 2010 064 545 A1, DE 203 11 657 U1, US 5,066,222 A, US 7,121,821 B2, US 2004/0161486 A1, WO 2015/181738 A1 oder DE 10 2015 005 358 A1 bekannt. FR 2 950 284 B1 zeigt eine zweiteilige Lochblende, bei der eine Teilblende um eine horizontal verlaufende Schwenkachse verschwenkt werden kann.

Die FR 2950 283 A1 zeigt kettenartig verbundene und als Endloskette umlaufende Transportgabeln mit radial nach außen weisenden Öffnungen, die von benachbarten Transportgabeln auf einem Teilumlaufweg teilweise verschlossen werden. Einen ähnlichen Stand der Technik zeigt die AT 000 520 U1, nämlich mehrteilig ausgeführte Transportelemente mit Transportgabeln mit radial nach außen weisenden Öffnungen. Die Transportelemente sind kettenartig verbunden und laufen als Endloskette um. Um die Öffnung der Transportgabeln auf einem Teilumlaufweg teilweise zu verschließen, um somit Vorformlinge gegen Herausfallen in radialer Richtung zu sichern, sind zwischen benachbarten Transportgabeln Klemmelemente angeordnet, die in einem gekrümmten Umlaufbereich die Öffnung freigeben und in einem geradlinig verlaufenden Umlaufbereich die Öffnung teilweise versperren.

Aufgabe der vorliegenden Erfindung ist die Bereitstellung einer Heizvorrichtung und einer Blasmaschine der eingangs genannten Art zur Herstellung eines verbesserten Temperaturprofils unter gleichzeitiger Verbesserung des Heizvorrichtungswirkungsgrades.

Diese Aufgabe wird gelöst durch eine Heizvorrichtung mit den Merkmalen des Anspruchs 1 und durch eine Blasmaschine mit den Merkmalen des Anspruchs 12. Die Aufgabe wird auch durch eine Verwendung einer Heizvorrichtung mit den Merkmalen des Anspruchs 13 gelöst. Vorteilhafte Ausgestaltungen sind in den Unteransprüchen angegeben.

Erfindungsgemäß ist eine Heizvorrichtung mit Vorformlingen und mit einer Heizstrecke zur thermischen Konditionierung von diesen aus thermoplastischem Material bestehenden Vorformlingen mit einem oberen, eine Öffnung aufweisenden Mündungsabschnitt, einem unterhalb des Mündungsabschnitts angeordneten kragenartigen Stützrings und einem am unteren Ende geschlossenen Bodenabschnitts auf ein für eine Blasformung geeignetes Temperaturprofil, wobei die Heizvorrichtung Transportmittel zum Transport der Vorformlinge entlang eines Transportweges der Heizvorrichtung aufweist, und wobei die Transportmittel jeweils mindestens ein Handhabungsmittel zum Halten und Hantieren der Vorformlinge tragen, wobei in einem Zwischenraum zwischen zwei, jeweils zur Hantierung eines Vorformlings vorgesehenen Handhabungsmitteln eine, zwangsgeführt dem Transportweg der Vorformlinge folgende Strahlungsblende angeordnet ist, die zumindest an einer Stirnseite einen Rezess zum partiellen Umgriff eines in dem zu dem Rezess angrenzenden Handhabungsmittel gehaltenen Vorformlings aufweist und wobei die Strahlungsblende derart angeordnet ist, dass ein Flächenbereich der Strahlungsblende zumindest zeitweise während des Transports der Vorformlinge in Längsrichtung des Vorformlings gesehen auf seiner dem Mündungsabschnitt abgewandten Seite mit einem Flächenbereich des Stützring überlappt.

Erfindungsgemäß sind die Handhabungsmittel als Transportdorne ausgebildet, an denen die Vorformlinge vorzugsweise hängend transportiert werden. Insbesondere ist daran gedacht, dass die Handhabungsmittel bzw. die Transportdorne jeweils einen Tragekopf aufweisen, mit denen ein Vorformling in seinem Mündungsbereich festgehalten werden kann. Der insbesondere in lotrechter Richtung im unteren Endbereich des Transportdorns angeordnete Tragekopf ist vorzugsweise derart ausgebildet, dass er zur Halterung des Vorformlings in die Mündungsöffnung des Vorformlings hineingreift und den Vorformling klemmend festhält. Zur Be- und Entladung eines Vorformlings ist daran gedacht, dass der Transportdorn entlang einer Längsachse des Vorformlings bzw. entlang einer Längsachse des Transportmittels axial verschiebbar gelagert ist. In einer besonders bevorzugten Variante ist daran gedacht, dass der Transportdorn in Richtung quer zur Transportrichtung der Vorformlinge bzw. quer zu einer Bewegungsbahn der Transportmittel axial verschiebbar ist.

Durch eine Überlappung der Strahlungsblende mit dem Stützring kann der Stützring und der oberhalb des Stützrings angeordnete Mündungsabschnitt vor ungewollter Aufheizung durch die zur Ausbildung des Temperaturprofils auf den Vorformlingskörper einwirkender Wärmestrahlung abgeschirmt werden.

Bei herkömmlichen Förderketten zum Transport der Vorformlinge entlang des Transportweges durch eine Heizvorrichtung hat jedes Kettenglied einen Transportdorn zur Aufnahme eines Vorformlings. Bei den bekannten Förderketten ist an dem Transportdorn eine Lochblende mit zentraler Bohrung angeordnet, wobei die Vorformlinge mit dem Transportdorn durch die Bohrung hindurch zur Beladung aufgenommen und zur Entladung abgesetzt werden. Der Stützring befindet sich dabei auf Höhe der Bohrung um einen möglichst kleinen Spalt für Wärmeverluste zu bilden. Dennoch entweicht durch den Spalt zwischen Stützring und Bohrung ein erheblicher Teil Wärmestrahlung aus einem Strahlungsraum unterhalb des Stützrings der nicht für die Erzeugung des Temperaturprofils genutzt werden kann. Außerdem werden durch die herkömmliche Konstruktion der Stützring und der Mündungsbereich oberhalb des Stützringes ungewollt aufgeheizt, was zu einer späteren Verformung dieser Bereiche führen kann.

Mit der vorgeschlagenen Lösung kann einerseits eine unerwünschte Aufheizung des Mündungsbereiches vermieden werden und außerdem kann ein wohldefiniertes Temperaturprofil unterhalb des Stützringes erzeugt werden, was den kontrollierten Materialabzug beim sich anschließenden Streckblasschritt verbessert.

Ein weiterer Vorteil der erfindungsgemäßen Anordnung der Strahlungsblenden liegt darin, dass ein ungewollt von einem Handhabungsmittel bzw. von einem Transportdorn abrutschender Vorformling nicht in den Heizungsraum fallen kann. Beim Transport durch den Heizungsraum bzw. der Heizstrecke der Heizvorrichtung untergreifen die Strahlungsblenden die Vorformlinge unterhalb des Stützrings, womit ein Durchrutschen und ein Abfallen verhindert wird. Bisweilen kam es vor, dass wegen Fehlfunktion oder wegen Materialfehler abrutschende Vorformlinge in die Heizkasten gefallen und am Boden des Heizkastens zerschmolzen sind. Das erforderte ggf. einen Stopp der Anlage und einen aufwendigen Reinigungsprozess.

Für eine Beladung eines Vorformlings an ein als Transportdorn ausgebildetes Handhabungsmittel kann vorgesehen sein, dass der Vorformling von einer extern zu den Transportmitteln angeordneten Übergabevorrichtung in axiale Richtung entlang einer Längsachse des Vorformlings bzw. in Richtung quer zur Transportrichtung der Vorformlinge bzw. quer zur Bewegungsrichtung der Transportmittel an das Handhabungsmittel übergeben wird. Bevorzugt kann alternativ oder zusätzlich vorgesehen sein, dass das als Transportdorn ausgebildete Handhabungsmittel einen Tragekopf aus einer Ruhestellung heraus in axiale Richtung, insbesondere axial nach unten verschiebt, um einen Vorformling für eine Beladung von einer Übergabevorrichtung zu übernehmen. Bei einer aktiven Bewegung des Handhabungsmittels ist daran gedacht, dass nach einer Aufnahme des Vorformlings der den Vorformling haltende Tragekopf in umgekehrte axiale Richtung, insbesondere axial nach oben in eine Transportstellung verschoben wird.

Zur Entladung eines Vorformlings von einem Handhabungsmittel ist an einen entsprechend umgekehrten Bewegungsablauf gedacht. Insbesondere kann für eine Entladung eines Vorformlings also vorgesehen sein, dass der Vorformling von einer extern zu den Transportmitteln angeordneten Entnahmevorrichtung in axiale Richtung entlang einer Längsachse des Vorformlings bzw. in Richtung quer zur Transportrichtung der Vorformlinge bzw. quer zur Bewegungsrichtung der Transportmittel von dem Handhabungsmittel abgenommen wird. Bevorzugt kann alternativ oder zusätzlich auch für den Entladevorgang vorgesehen sein, dass das als Transportdorn ausgebildete Handhabungsmittel einen Tragekopf aus einer Transportstellung heraus in axiale Richtung, insbesondere axial nach unten verschiebt, um den an dem Tragekopf gehaltenen Vorformling für eine Entladung an eine Entnahmevorrichtung zu übergeben. Bei einer aktiven Bewegung des Handhabungsmittels ist daran gedacht, dass nach einer Übergabe des Vorformlings der leere Tragekopf in umgekehrte axiale Richtung, insbesondere axial nach oben in eine Ruhestellung verschoben wird.

Für die Be- und/oder Entladung der Vorformlinge mit einer axialen Bewegung des Vorformlings, bei der der Stützring des Vorformlings in lotrechter Richtung an den erfindungsgemäßen Strahlungsblenden vorbeigeführt wird, muss eine kollisionsfreie Verschiebung des Vorformlings gewährleistet sein. Da erfindungsgemäß vorgesehen ist, dass ein Flächenbereich der Strahlungsblende zumindest zeitweise während des Transports der Vorformlinge in Längsrichtung des Vorformlings gesehen auf seiner dem Mündungsabschnitt abgewandten Seite mit einem Flächenbereich des Stützrings überlappt, muss der überlappende Flächenbereich der Strahlungsblende während der Be- und/oder Entladung aus der Bewegungsbahn des Stützringes entfernt werden. Wie im Folgenden näher erläutert, kann die Strahlungsblende dafür zum Beispiel seitlich verschwenkt werden bzw. wird bei einer bestimmten Streckenführung der Transportmittel eine sich erweiternde Lücke zwischen zwei nacheinander geführten Strahlungsblenden gebildet, was einen Freiraum für eine kollisionsfreie Verschiebung des Vorformlings insbesondere in axiale Richtung quer zur Verschwenkbewegung zwischen Vorformling und Strahlungsblende an den Strahlungsblenden vorbei gewährleistet.

Bei Verwendung von Handhabungsmitteln bzw. Transportdornen mit einem in die Mündungsöffnung eines Vorformlings zumindest teilweise hineingreifenden Tragekopf kann in einer vorteilhaften Ausgestaltung zudem vorgesehen sein, dass die Unterseite bzw. die Stirn des in den Mündungsbereich des Vorformlings hineinragenden Tragekopfbereiches reflektierend für Wärmestrahlung ausgebildet ist. Dadurch kann eine zusätzliche Abschirmung des Mündungsbereiches gegen Überhitzung durch von vorformlingskörperseitig einwirkender und durch die Wand des Vorformlings in den Mündungsbereich einstrahlender Wärmestrahlung erzielt werden. Mit einer reflektierenden Unterseite bzw. Stirn des Tragekopfes wird einerseits der Mündungsbereich gegen unerwünschte Aufheizung geschützt und andererseits kann die Energieeffizienz der Heizvorrichtung gesteigert werden, da mehr Wärmestrahlung im Heizbereich gehalten werden kann. Die Unterseite bzw. Stirn des Tragekopfes kann zum Beispiel eine polierte Metallfläche, eine Wärmestrahlung reflektierende Keramik oder sonstige aus dem Stand der Technik bekannte Materialien bzw. Elemente zur Reflektion von Wärmestrahlung aufweisen. Insbesondere kann vorgesehen sein, die Reflektionsfläche derart zu formen, dass die von unterhalb des Stützringes des Vorformlings eintreffende Wärmestrahlung in vorbestimmte Richtungen zurückreflektiert wird.

Bei der erfindungsgemäßen Heizvorrichtung ist daran gedacht, dass die Heizstrecke aus einem oder aus mehreren Heizabschnitten besteht, wobei ein Abschnitt jeweils aus einem einzelnen oder aus mehreren in Transportrichtung hintereinanderliegend angeordneten Heizeinrichtungen, sogenannten Heizkästen besteht. Die Transportmittel sind vorzugsweise Kettenglieder, die zur Ausbildung einer Förderkette mittels einer Drehachse schwenkbar aneinander angelenkt sind.

Erfindungsgemäß sind die Handhabungsmittel als Transportdorne ausgebildet, wobei die Transportmittel zur Ausbildung einer Förderkette kettengliedartig schwenkbar aneinander angelenkt sind. In einer ersten Ausführungsform kann des Weiteren vorgesehen sein, dass jeder unmittelbar aufeinanderfolgende Transportdorn der Förderkette zur Handhabung eines Vorformlings dient. Alternativ ist denkbar, dass zwischen zwei für die Handhabung vorgesehenen Transportdornen ein oder mehr als ein Kettenglied als Leerglied zur Bereitstellung einer ausreichend breiten Lücke eingesetzt sind. Denkbar ist bei dieser Ausführungsform auch, zwischen zwei für die Handhabung vorgesehenen Transportdornen einen oder mehr als einen Transportdorn als Leerdorn vorzusehen, wobei einer der Leerdorne als Halterung für eine erfindungsgemäße Strahlungsblende dienen kann. Diese alternative Ausführungsform kommt beispielsweise in Betracht, wenn die an der Förderkette transportierten Vorformlinge jeweils breiter sind als ein zur Hantierung eines Vorformlings vorgesehener Transportdorn.

Vorzugsweise hat jede Strahlungsblende zwei Rezesse, die jeweils ausgebildet sind, einen Vorformling einzufassen. In einer alternativen Ausführungsform kann vorgesehen sein, dass mehr als eine Strahlungsblende in dem Zwischenraum zwischen zwei Vorformlingen angeordnet sind, wobei jede an einem Vorformling angrenzende Strahlungsblende einen Rezess zum partiellen Umgriff eines Vorformlings aufweist. Die Rezesse können insbesondere eine an die Umfangsform bzw. den Radius des Vorformlings angepasst sein, vorzugsweise angepasst an die Umfangsform bzw. den Radius des Vorformlings im Bereich unmittelbar unterhalb des Stützrings, also auf der dem Mündungsabschnitt abgewandten Seite des Stützrings.

Konstruktive Details der vorliegenden Heizvorrichtung insbesondere zum Aufbau und zur Funktion erfindungsgemäßer Transport- und Handhabungsmittel können wie in DE 10 2015 005 358.2 und der DE 10 2014 017 546.4 ausgeführt sein. Diese Druckschriften werden dazu ausdrücklich in Bezug genommen.

Insbesondere bei der Verwendung herkömmlicher Transportdorne als Handhabungsmittel, mit denen Vorformlinge zur Be- und Entladung mit dem Mündungsabschnitt und dem Stützring an der Strahlungsblende vorbei in eine Haltestellung aufgenommen bzw. in eine Abgabestellung abgegeben werden, ist daran gedacht, dass die Strahlungsblende in eine den Stützring lateral freigebende Offenstellung und eine den Stützring untergreifende Geschlossenstellung bewegbar ist.

In der erfindungsgemäßen Heizvorrichtung ist vorgesehen, dass ein Flächenbereich einer Strahlungsblende mit dem Stützring überlappt. Das Spaltmaß zwischen Strahlungsblende kann somit sehr gering gehalten werden, wodurch eine deutlich verbesserte Abschirmung des Strahlungsraumes der Heizstrecke erzielt wird. Am Spalt zwischen Vorformling und Strahlungsblende stellt sich ein sehr steiles Temperaturprofil ein, wodurch ein sehr exakt definierter Abzugsbereich für die sich dem Heizprozess anschließende biaxiale Streckung entsteht.

Um eine ungestörte Be- und Entladung der Vorformlinge zu ermöglichen, sind die Strahlungsblenden in eine Offenstellung und eine Geschlossenstellung bewegbar. In der Geschlossenstellung besteht auf der dem Vorformlingsboden zugewandten Seite des Stützrings Überlappung eines Flächenbereiches der Strahlungsblende mit einem Flächenabschnitt des Stützrings. Die Strahlungsblende greift also unter den Stützring. In der Offenstellung ist die Strahlungsblende lateral von dem Vorformling entfernt, so dass die Überlappung des Stützrings mit der Strahlungsblende aufgehoben ist. In der Offenstellung zweier, einen Vorformling einfassenden Strahlungsblenden kann die Be- und Entladung also kollisionslos durchgeführt werden.

Die Strahlungsblenden sind vorzugsweise derart zwangsgeführt, dass sie die Vorformlinge während des Transports zumindest zeitweise bzw. abschnittsweise, zum Beispiel während des Transports durch eine Heizstrecke partiell also über einen Umfangsabschnitt umgreifen. Dabei ist beispielsweise daran gedacht, dass die Strahlungsblenden während einer geradlinigen Führung des Transportweges eine Geschlossenstellung einnehmen und während einer Kurvenfahrt eine Offenstellung einnehmen. Die Offen- bzw. Geschlossenstellung kann mittels Kurvensteuerung eingestellt werden.

Hohe Flexibilität bei der Einstellung des Temperaturprofils, insbesondere zur Anpassung des Temperaturprofils für verschiedene Vorformlingstypen bzw. Behälterformen kann dadurch erreicht werden, dass die Strahlungsblende höhenverstellbar ausgebildet ist. In dieser Weiterbildung ist der Abstand zwischen der vorformlingskörperseitigen, also der dem Strahlungsraum zur Aufheizung des Vorformlings zugewandten Oberfläche der Strahlungsblende relativ zum Stützring bzw. zum Vorformling in Längsrichtung des Vorformlings veränderbar. Somit kann der bei der Temperierung erzeugte Abzugspunkt im Abstand zum Stützring variiert werden.

Der Wirkungsgrad der Heizvorrichtung kann durch eine gezielte Auswahl der Materialien und Oberflächenbeschaffenheit der mit Wärmestrahlung in Kontakt kommenden Bauteile verbessert werden. Es kann zum Beispiel vorgesehen sein, dass die Strahlungsblende vorformlingskörperseitig eine die Strahlungswärme reflektierende Oberfläche aufweist. Es kann beispielsweise vorgesehen sein, dass die Oberfläche poliert ist. In einer einfachen Ausgestaltung kann die Strahlungsblende aus einem Metall hergestellt sein. Alternativ oder zusätzlich kann vorgesehen sein, dass die Strahlungsblende mit einer Wärmestrahlung reflektierenden Schicht beschichtet ist.

Um eine übermäßig Aufheizung und eine damit ggf. verbundene Beschädigung der Strahlungsblende zu vermeiden, kann vorgesehen sein, dass die Heizvorrichtung eine Kühleinrichtung aufweist mittels der die Strahlungsblende mit einem Kühlgas beaufschlagbar ist.

Vorzugsweise wird die Oberseite, also die dem Mündungsabschnitt des Vorformlings zugewandten Oberfläche der Strahlungsblende mit Kühlluft beaufschlagt. Die Kühlung verhindert das unerwünschte Aufheizen der Strahlungsblende.

In einer möglichen Ausgestaltung kann vorgesehen sein, dass die Strahlungsblende zwei Rezesse zum partiellen Umgriff jeweils eines Vorformlings aufweist. Dabei ist daran gedacht, dass die Strahlungsblende zumindest zeitweise während des Transports der Vorformlinge mit dem ersten Rezess einen an einem ersten Handhabungsmittel getragenen ersten Vorformling umgreift und mit dem zweiten Rezess einen an einem zweiten Handhabungsmittel getragenen zweiten Vorformling umgreift.

Die Rezesse sind derart geformt, dass die Vorformlinge partiell also bereichsweise umgriffen werden können. Für eine effiziente Abschirmung des Mündungsabschnitts bzw. des unterhalb des Mündungsabschnitts angeordneten Stützrings ist daran gedacht, dass der Rezess einen Vorformling über einen Winkelbereich von 160° bis 180° umgreift.

Vorzugsweise umgreift der Rezess den Vorformling über einen Winkelbereich von 180°, also hälftig, so dass eine, sich auf der anderen Seite des Vorformlings anschließende Strahlungsblende den restlichen Winkelbereich abdecken kann. Somit kann eine enge Umschließung des Vorformlings und damit eine möglichst gute Abschirmung gegen im Bereich des Vorformlingskörpers eingesetzte Heizstrahlung erreicht werden.

In möglichen Ausgestaltungen kann vorgesehen sein, dass die Strahlungsblende an einem Handhabungsmittel oder an einem ein Handhabungsmitte tragendes Transportmittel gehaltert ist. In einer ersten Variante ist daran gedacht, dass die Strahlungsblenden jeweils in Transportrichtung schwenkbar an dem Transportmittel angelenkt sind. Dabei kann vorgesehen sein, dass die Schwenkachse der Strahlungsblende und Kettengliederachse zweier kettengliederartig verbundener Transportmittel zusammenfallen.

Denkbar ist auch, dass die Strahlungsblende mittels zweier Schwenkachsen mit zwei in Transportrichtung unmittelbar benachbarter Transportmittel verbunden ist, wobei die Strahlungsblende jeweils mit einer Schwenkachse an einem Transportmittel angelenkt ist.

Bei drehgelenkgelagerten Anlenkung der Strahlungsblenden an einer Kettengliederachse des Transportmittels wird die Strahlungsblende beim Durchfahren einer Kurvenbahn außer Eingriff von dem Vorformling also in eine Offenstellung geschwenkt. Der Vorformling wird dabei freigegeben und in diesem Zustand kann ein Vorformling von dem als Transportdorn ausgebildeten Handhabungsmittel abgesetzt oder aufgenommen werden, ohne dass der Stützring mit der Strahlungsblende kollidiert.

Besonders gute Ergebnisse hinsichtlich der Temperaturkonditionierung des Vorformlings beim Einsatz der erfindungsgemäßen Strahlungsblende lassen sich dadurch erzielen, dass der vorformlingskörperseitige Randbereich der in die Strahlungsblende eingearbeiteten Rezesse eine Fase aufweist, die eine sich über den Verlauf des Randbereiches verändernde Steigung aufweist. Vorzugsweise kann eine über den Verlauf des Randbereiches sich stetig verändernde Steigung des Fasenwinkels vorgesehen sein. Dabei ist insbesondere vorgesehen, dass sich der Fasenwinkel, also der Winkel in Bezug auf die Längsachse des Vorformlings von einem Winkel größter Steilheit, also beispielsweise von einem Winkel kleiner als 45° oder kleiner als 30°, zu einem Winkel kleinster Steilheit, also einem Winkel von größer als 45° oder größer als 60° vergrößert.

Bei dieser Ausführungsform weist der Rezess der Strahlungsblende also ein asymmetrisches Fasenprofil auf.

Aus Versuchsreihen von Heizdurchläufen unter Verwendung von Strahlungsblenden mit Rezessen, die ein asymmetrisches Fasenprofil aufweisen hat sich ergeben, dass sich durch einen geeigneten asymmetrischen Steigungsverlauf vorteilhafte Temperaturgradienten im Bereich unmittelbar unterhalb des Stützrings ergeben. Bei dem Transport der Vorformlinge durch den Heizraum der Heizvorrichtung werden die Vorformlinge üblicherweise mit auf einer Seite des Heizraumes angeordneten Wärmestrahlern aufgeheizt. Wenn der vorformlingskörperseitige Randbereich der die Vorformlinge umgreifenden Rezesse auf der den Heizstrahlern abgewandten Seite des Vorformlings einen steilen Fasenwinkel aufweist, also beispielsweise einen Winkel von weniger als 45° oder weniger als 30° zur Längsachse des Vorformlings, kann die dabei steil ausgebildete Fasenfläche in vorteilhafter Weise als Reflexionsfläche zur gezielten Aufheizung bestimmter Wandbereiche unmittelbar unterhalb des Stützrings genutzt werden. Ein flacher Fasenwinkel des vorformlingskörperseitigen Randbereiches der die Vorformlinge umgreifenden Rezesse, also beispielsweise ein Winkel von mehr als 45° oder mehr als 60° zur Längsachse des Vorformlings, auf der den Heizstrahlern zugewandten Seite des Vorformlings kann hingegen zu einem gezielten Durchlassen von ansonsten abgeblendeter Heizstrahlung dienen, um den Wandbereich des Vorformlings unmittelbar unterhalb des Stützrings gezielt hinsichtlich des Temperaturprofils zu konditionieren.

Besonders vorteilhaft hinsichtlich der Ausbildung eines homogenen Temperaturprofils ist es, wenn die Fasenprofile zweier sich gegenüberliegender, gemeinsam einen Vorformling von zwei Seiten einfassenden Rezessen gleichförmig ausgebildet sind, so dass ein hinsichtlich der Steigungsänderung der Fase stufenlos dem gemeinsamen Verlauf beider Randbereiche folgendes Fasenprofil ausbildet ist. Es versteht sich, dass Abschnitte der Fasenfläche, insbesondere die zur Reflexion von Wärmestrahlung vorgesehenen Bereiche hoher Steilheit eine die Wärmestrahlung besonders gut reflektierende bzw. eine verspiegelte Oberfläche bzw. eine entsprechende Oberflächenbehandlung aufweisen können.

Erfindungsgemäß ist auch eine Blasmaschine aufweisend eine erfindungsgemäße Heizvorrichtung. Vorteile und Ausgestaltungen der Blasmaschine lassen sich entsprechend der zuvor beschriebenen Ausführungsformen zur erfindungsgemäßen Heizvorrichtung ableiten.

In den Zeichnungen sind Ausführungsbeispiele der Erfindung schematisch dargestellt. Es zeigen:
Fig. 1 Eine perspektivische Darstellung einer Blasstation zur Herstellung von Behältern aus Vorformlingen,
Fig. 2 einen Längsschnitt durch eine Blasform, in der ein Vorformling gereckt und expandiert wird,
Fig. 3 eine Skizze zur Veranschaulichung eines grundsätzlichen Aufbaus einer Vorrichtung zur Blasformung von Behältern,
Fig. 4 eine modifizierte Heizstrecke mit vergrößerter Heizkapazität,
Fig. 5 eine Seitenansicht eines als Transportdorn ausgebildeten Handhabungsmittels,
Fig. 6 einen Schnitt des Handhabungsmittels aus Fig. 5 entlang der Schnittlinie 6-6,
Fig. 7 bis 11 ein Abschnitt einer Förderkette mit erfindungsgemäßen Strahlungsblenden gemäß eines ersten Ausführungsbeispiels,
Fig. 12 bis 14 ein Abschnitt einer Förderkette mit erfindungsgemäßen Strahlungsblenden gemäß eines zweiten Ausführungsbeispiels, und
Fig. 15 eine schematische Schnittdarstellung eines Vorformlings in Transportrichtung durch einen Heizbereich der Heizvorrichtung mit einer, den Vorformling partiell umgreifenden Strahlungsblende.

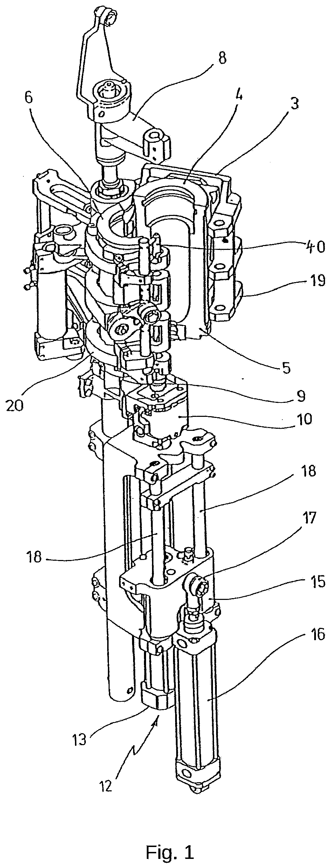

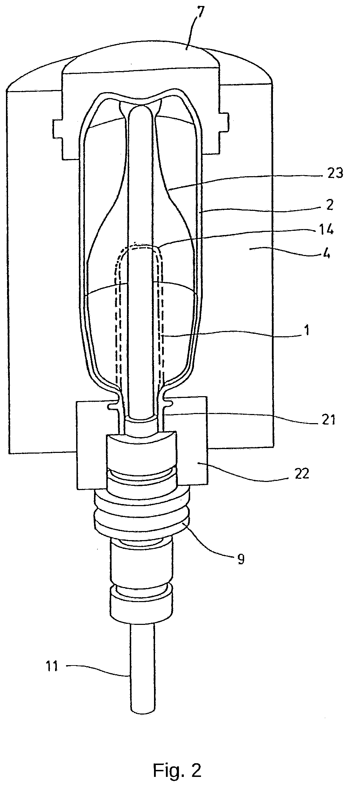

Der prinzipielle Aufbau einer Vorrichtung zur Umformung von Vorformlingen 1 in Behälter 2 ist in Fig. 1 und in Fig. 2 dargestellt. Die Anordnung kann dabei wie dargestellt oder in einer vertikalen Ebene um 180° gedreht erfolgen.

Die Vorrichtung zur Formung des Behälters 2 besteht im Wesentlichen aus einer Blasstation 3, die mit einer Blasform 4 versehen ist, in die ein Vorformling 1 einsetzbar ist. Der Vorformling 1 kann ein spritzgegossenes Teil aus Polyethylenterephthalat sein. Zur Ermöglichung eines Einsetzens des Vorformlings 1 in die Blasform 4 und zur Ermöglichung eines Herausnehmens des fertigen Behälters 2 besteht die Blasform 4 aus Formhälften 5, 6 und einem Bodenteil 7, das von einer Hubvorrichtung 8 positionierbar ist. Der Vorformling 1 kann im Bereich der Blasstation 3 von einem Halteelement 9 fixiert sein. Dieses Halteelement 9 kann z.B. erfindungsgemäß oder wie im Stand der Technik bekannt ausgebildet sein. Es ist beispielsweise möglich, den Vorformling 1 über Zangen oder andere Handhabungsmittel direkt in die Blasform 4 einzusetzen. Zur Ermöglichung einer Druckluftzuleitung ist unterhalb der Blasform 4 ein Anschlusskolben 10 angeordnet, der dem Vorformling 1 Druckluft zuführt und gleichzeitig eine Abdichtung vornimmt. Bei einer abgewandelten Konstruktion ist es grundsätzlich aber auch denkbar, feste Druckluftzuleitungen zu verwenden.

Eine Reckung des Vorformlings 1 erfolgt bei diesem Ausführungsbeispiel mit Hilfe einer Reckstange 11, die von einem Zylinder 12 positioniert wird. Gemäß einer anderen Ausführungsform wird eine mechanische Positionierung der Reckstange 11 über Kurvensegmente durchgeführt, die von Abgriffrollen beaufschlagt sind. Die Verwendung von Kurvensegmenten ist insbesondere dann zweckmäßig, wenn mehrere Blasstationen 3 auf einem rotierenden Blasrad 25 angeordnet sind.

Bei der in Fig. 1 dargestellten Ausführungsform ist das Recksystem derart ausgebildet, dass eine Tandemanordnung von zwei Zylindern 12 bereitgestellt ist. Von einem Primärzylinder 13 wird die Reckstange 11 zunächst vor Beginn des eigentlichen Reckvorganges bis in den Bereich eines Bodens 14 des Vorformlings 1 gefahren. Während des eigentlichen Reckvorganges wird der Primärzylinder 13 mit ausgefahrener Reckstange gemeinsam mit einem den Primärzylinder 13 tragenden Schlitten 15 von einem Sekundärzylinder 16 oder über eine Kurvensteuerung positioniert. Insbesondere ist daran gedacht, den Sekundärzylinder 16 derart kurvengesteuert einzusetzen, dass von einer Führungsrolle 17, die während der Durchführung des Reckvorganges an einer Kurvenbahn entlang gleitet, eine aktuelle Reckposition vorgegeben wird. Die Führungsrolle 17 wird vom Sekundärzylinder 16 gegen die Führungsbahn gedrückt. Der Schlitten 15 gleitet entlang von zwei Führungselementen 18.

Nach einem Schließen der im Bereich von Trägern 19, 20 angeordneten Formhälften 5, 6 erfolgt eine Verriegelung der Träger 19, 20 relativ zueinander mit Hilfe einer Verriegelungseinrichtung 40. Zur Anpassung an unterschiedliche Formen eines Mündungsabschnittes 21 des Vorformlings 1 ist gemäß Fig. 2 die Verwendung separater Gewindeeinsätze 22 im Bereich der Blasform 4 vorgesehen.

Fig. 2 zeigt zusätzlich zum geblasenen Behälter 2 auch gestrichelt eingezeichnet den Vorformling 1 und schematisch eine sich entwickelnde Behälterblase 23.

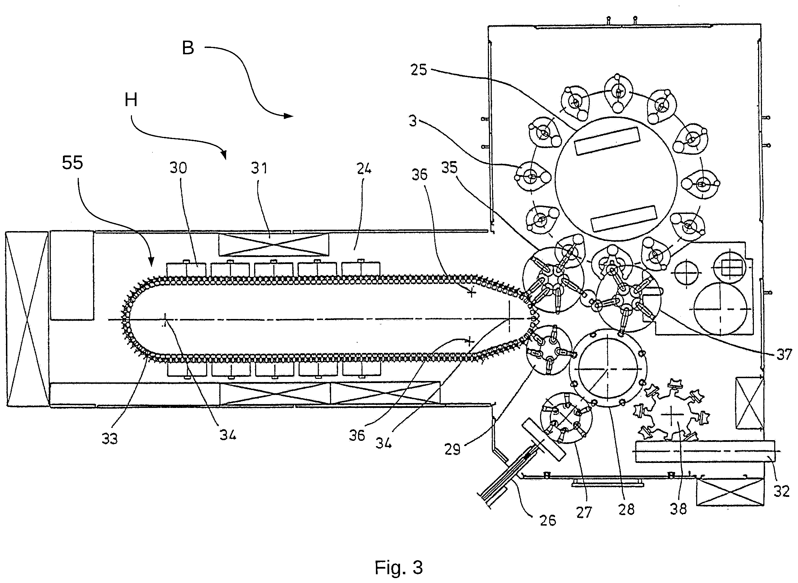

Fig. 3 zeigt den grundsätzlichen Aufbau einer Blasmaschine, die mit einer Heizstrecke 24 sowie einem rotierenden Blasrad 25 versehen ist. Ausgehend von einer Vorformlingseingabe 26 werden die Vorformlinge 1 von Übergaberädern 27, 28, 29 in den Bereich der Heizstrecke 24 transportiert. Entlang der Heizstrecke 24 sind Heizstrahler 30 als Heizeinrichtungen sowie Gebläse 31 angeordnet, um die Vorformlinge 1 zu temperieren. Nach einer ausreichenden Temperierung der Vorformlinge 1 werden diese von einem Übergaberad 35 an das Blasrad 25 übergeben, in dessen Bereich die Blasstationen 3 angeordnet sind. Die fertig geblasenen Behälter 2 werden von weiteren Übergaberädern 37, 28, 38 einer Ausgabestrecke 32 zugeführt. Das Übergaberad 37 ist dabei als ein Entnahmerad und das Übergaberad 38 als ein Ausgaberad ausgebildet.

Um einen Vorformling 1 derart in einen Behälter 2 umformen zu können, dass der Behälter 2 Materialeigenschaften aufweist, die eine lange Verwendungsfähigkeit von innerhalb des Behälters 2 abgefüllten Lebensmitteln, insbesondere von Getränken, gewährleisten, müssen spezielle Verfahrensschritte bei der Beheizung und Orientierung der Vorformlinge 1 eingehalten werden. Darüber hinaus können vorteilhafte Wirkungen durch Einhaltung spezieller Dimensionierungsvorschriften erzielt werden. Als thermoplastisches Material können unterschiedliche Kunststoffe verwendet werden. Einsatzfähig sind beispielsweise PET (Polyethylenterephthalat), PEN (Polyethylennaphthalat) oder PP (Polypropylen).

Die Expansion des Vorformlings 1 während des Orientierungsvorganges erfolgt durch Druckluftzuführung. Die Druckluftzuführung ist in eine Vorblasphase, in der Gas, zum Beispiel Pressluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, dass bei der dargestellten Ausführungsform die Heizstrecke 24 Teil des Transportweges der Vorformlinge 1 ist. Der Transport der Vorformlinge 1 erfolgt in der Aufheizvorrichtung H mittels einer Vielzahl umlaufender Transportelemente 33, die kettenartig aneinandergereiht und entlang von Umlenkrädern 34, 36 geführt sind. Die umlaufenden Transportelemente 33 bewegen sich also entlang einer Kettenbahn 55, die auch die Transportbahn der Vorformlinge bildet, da die Vorformlinge 1 entlang der Kettenbahn 55 geführt sind. Insbesondere ist daran gedacht, durch die kettenartige Anordnung der Transportelemente 33 eine im Wesentlichen rechteckförmige Grundkontur aufzuspannen. Bei der dargestellten Ausführungsform werden im Bereich der dem Übergaberad 27 zugewandten Ausdehnung der Heizstrecke 24 ein einzelnes relativ groß dimensioniertes Umlenkrad 34 und im Bereich von benachbarten Umlenkungen zwei vergleichsweise kleiner dimensionierte Umlenkräder 36 verwendet. Grundsätzlich sind aber auch beliebige andere Führungen denkbar.

Zur Ermöglichung einer möglichst dichten Anordnung des Übergaberades 27 und des Blasrades 25 relativ zueinander erweist sich die dargestellte Anordnung als besonders zweckmäßig, da im Bereich der entsprechenden Ausdehnung des Transportweges 55 drei Umlenkräder 34, 36 positioniert sind, und zwar jeweils die kleineren Umlenkräder 36 im Bereich der Überleitung zu den linearen Verläufen des Transportweges 55 und das größere Umlenkrad 34 im unmittelbaren Übergabebereich zum Übergaberad 27 und zum Blasrad 25. Alternativ zur Verwendung von kettenartigen Transportelementen 33 ist es beispielsweise auch möglich, ein rotierendes Heizrad zu verwenden.

Nach einem fertigen Blasen der Behälter 2 werden diese vom Übergaberad 38 aus dem Bereich der Blasstationen 3 herausgeführt und zur Ausgabestrecke 32 transportiert.

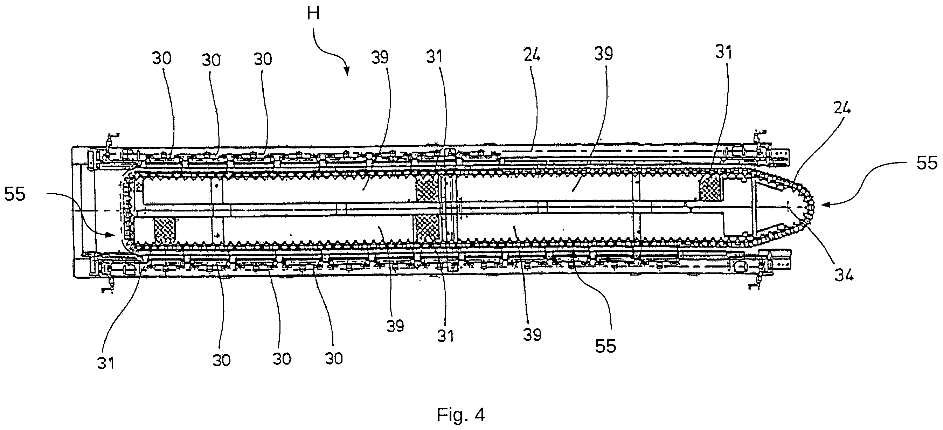

In der in Fig. 4 dargestellten modifizierten Aufheizvorrichtung H können durch die größere Anzahl von Heizstrahlern 30 eine größere Menge von Vorformlingen 1 je Zeiteinheit temperiert werden. Die Gebläse 31 leiten hier Kühlluft in den Bereich von Kühlluftkanälen 39 ein, die den zugeordneten Heizstrahlern 30 jeweils gegenüberliegen und über Ausströmöffnungen die Kühlluft abgeben. Durch die Anordnung der Ausströmrichtungen wird eine Strömungsrichtung für die Kühlluft im Wesentlichen quer zu einer Transportrichtung der Vorformlinge 1 realisiert. Die Kühlluftkanäle 39 können im Bereich von den Heizstrahlern 30 gegenüberliegenden Oberflächen Gegenreflektoren für die Heizstrahlung bereitstellen, ebenfalls ist es möglich, über die abgegebene Kühlluft auch eine Kühlung der Heizstrahler 30 zu realisieren.

Ein Transport der Vorformlinge 1 und der Behälter 2 durch die Blasmaschine B kann in unterschiedlicher Art und Weise erfolgen. Gemäß der Erfindung werden die Vorformlinge zumindest entlang des wesentlichen Teiles ihres Transportweges von Transportdornen getragen. Ebenfalls sind hinsichtlich der räumlichen Orientierung der Vorformlinge unterschiedliche Varianten denkbar.

Gemäß einer Variante wird der Vorformling im Bereich der Vorformlingseingabe 26 mit seiner Mündung in lotrechter Richtung nach oben orientiert zugeführt, anschließend gedreht, entlang der Heizstrecke 24 und des Blasrades 25 mit seiner Mündung in lotrechter Richtung nach unten orientiert gefördert und vor einem Erreichen der Ausgabestrecke 32 wieder gedreht. Gemäß einer anderen Variante wird der Vorformling 2 im Bereich der Heizstrecke 24 mit seiner Mündung in lotrechter Richtung nach unten orientiert beheizt, vor Erreichen des Blasrades 25 jedoch wieder um 180° gedreht.

Gemäß einer dritten Ausführungsvariante durchläuft der Vorformling den gesamten Bereich der Blasmaschine B ohne Durchführung von Wendevorgängen mit seiner Mündung in lotrechter Richtung nach oben orientiert.

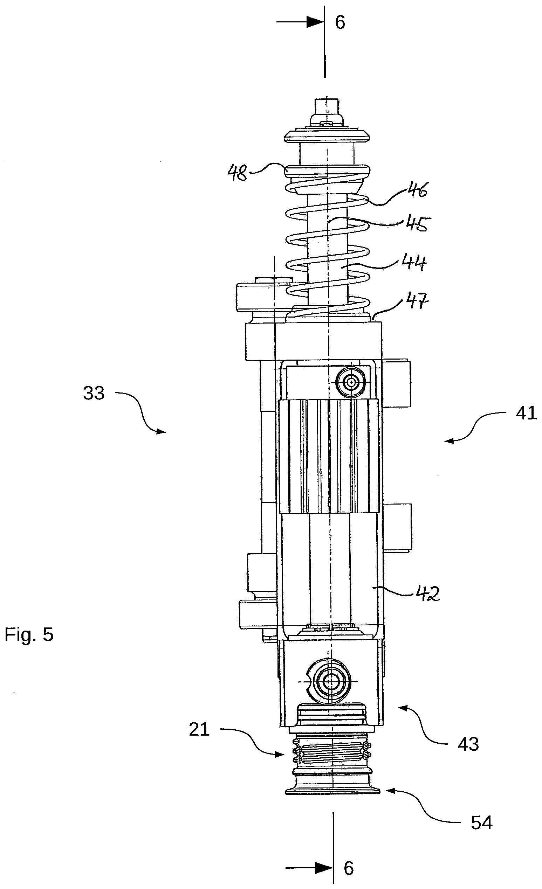

Fig. 5 zeigt eine teilweise Darstellung einer Seitenansicht eines Vorformlings 1, in dessen Mündungsabschnitt 21 bereichsweise eine aus dem Stand der Technik bekannte Haltevorrichtung 41 eingeführt ist. Diese Haltevorrichtung 41 ist zusammen mit dem Transportelement 33 ein Beispiel für ein Transport- und Handhabungsmittel im Sinne der Patentansprüche. In den schematischen Figuren 3 und 4 ist jeweils nur das Bezugszeichen 33 angegeben für die kettenartig verbundenen Transportelemente.

Die beispielhaft gezeigte Haltevorrichtung 41 weist eine Elementbasis 42, einen dem Vorformling 1 zugewandten Kopf 43 sowie einen mit dem Kopf 43 verbundenen Schaft 44 auf. Der Schaft 44 mit dem Kopf 43 ist relativ zur Elementbasis 42 in Richtung einer Elementlängsachse 45 beweglich. Eine Grundposition des Schaftes 44 relativ zur Elementbasis 42 kann von einer Feder 46 vorgegeben werden. Die Feder 46 ist beim dargestellten Ausführungsbeispiel zwischen einer Oberseite 47 der Elementbasis 42 und einem seitlich über den Schaft 44 überstehenden Endsegment 48 angeordnet.

Gemäß einem typischen Ausführungsbeispiel kann eine Mehrzahl von Elementbasen 42 kettenartig miteinander verbunden werden oder mit einer umlaufenden Transportkette verbunden werden. Es ergibt sich dadurch eine Anordnung, wie sie in den Figuren 3 und 4 gezeigt ist. Die Haltevorrichtung 41 kann aber auch an umlaufenden Übergaberädern oder sonstigen Einrichtungen angebracht sein. Ebenfalls erfolgt gemäß einem typischen Ausführungsbeispiel eine Positionierung des Schaftes 44 relativ zur Elementbasis 42 kurvengesteuert über eine Kurve, die sich zumindest abschnittweise entlang eines Transportweges des Tragelementes 41 erstreckt.

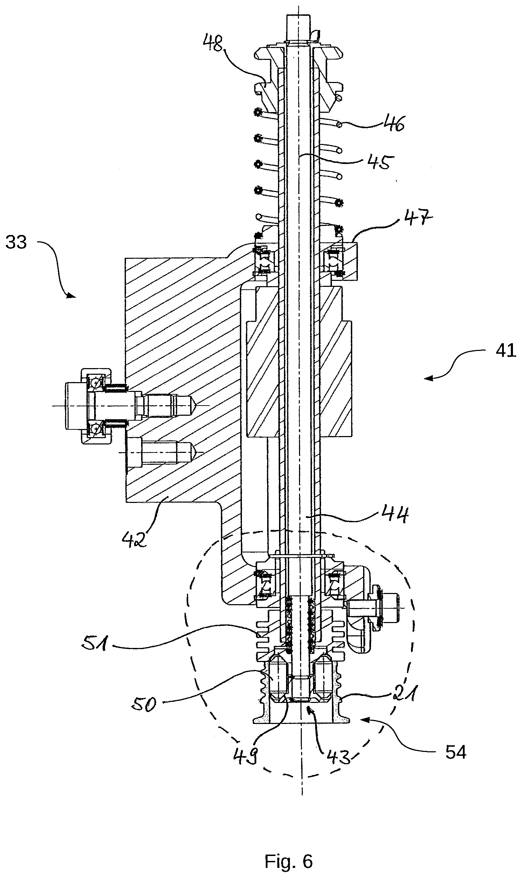

Fig. 6 zeigt in einem Längsschnitt die Positionierung des Kopfes 43 innerhalb eines Mündungsabschnittes 21 eines Vorformlings 1 oder eines Behälters 2. Es ist zu erkennen, dass der Kopf 43 Vertiefungen 49 aufweist, in denen Klemmelemente 50 angeordnet sind. Außerhalb des in den Mündungsabschnitt 21 einführbaren Bereiches kann der Kopf 43 einen Kühlkörper 51 aufweisen, der mit Kühlrippen zur Wärmeabstrahlung versehen ist.

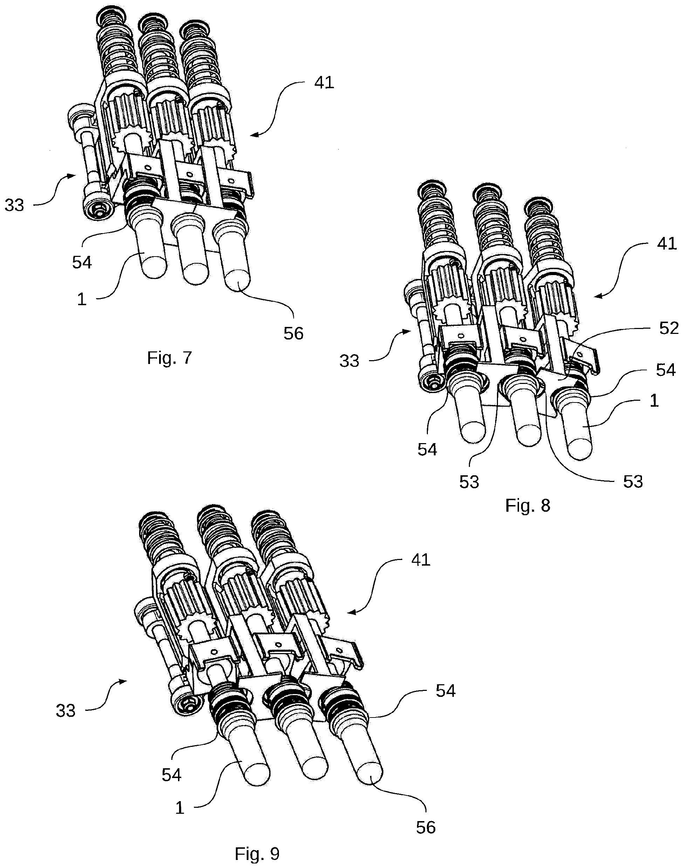

Die Figuren 7 - 11 zeigen ein erstes Ausführungsbeispiel für erfindungsgemäße Transportmittel 33 und Handhabungsmittel 41 mit an den Handhabungsmitteln 41 gehaltenen Vorformlingen 1. Die Transportmittel 33 sind im vorliegenden Beispiel als Kettenglieder ausgebildet, die rückseitig mittels Drehachsen 57 aneinander schwenkbar angelenkt sind. Vorliegend wird aus Gründen der Übersichtlichkeit nur ein Teil der mittels der Kettenglieder ausgebildeten Transportkette gezeigt. Die an den als Kettenglieder ausgebildeten Transportmitteln 33 gehalterte Handhabungsmitteln 41 sind als Transportdorne ausgebildet. Die Transportdorne können gemäß den Erläuterungen zu den Figuren 5 und 6 ausgebildet sein.

In Fig. 7 sind insbesondere drei Kettenglieder 33 dargestellt, die jeweils einen Transportdorn 41 tragen. In dem Zwischenraum zwischen zwei in Erstreckungsrichtung der Transportkette hintereinander angeordneten Vorformlingen 1 sind erfindungsgemäße Strahlungsblenden 52 angeordnet. Vorliegend sind die Strahlungsblenden 52 plattenartig geformt. Die Strahlungsblenden 52 sind mit Haltearmen an den in Zeichnungsebene hinten liegenden Kettengliedern 33 befestigt.

Fig. 7 zeigt die Position der Kettenglieder 33 mit den Haltedornen 41 bei einer gradlinigen Streckenführung des Transportweges 55. Die Rezesse 53 der Strahlungsblenden 52 umgreifen dabei die Vorformlinge 1 über einen Winkelbereich von 180°.

Fig. 8 zeigt die Kettenglieder aus Fig. 7 in einer Kurvenfahrt. Deutlich zu erkennen ist in Fig. 8, dass bei einer Kurvenfahrt ein lateraler Abstand zwischen der Strahlungsblende 52 und dem an die Strahlungsblende 52 angrenzenden Vorformlingen 1 hergestellt ist, sodass die Vorformlinge 1, wie in Fig. 9 gezeigt, mittels der Transportdorne 41 nach unten verschiebbar ist, ohne dass der Stützring 54 der Vorformlinge mit der Strahlungsblende 52 kollidiert.

In Fig. 7 ist insbesondere gezeigt, dass die Strahlungsblende 52 mit Rezessen 53 die Vorformlinge 1 unterhalb der Stützringe 54 umgreift. Eine auf die Vorformlinge 1 unterhalb der Stützringe 54 einwirkende Wärmestrahlung kann somit effizient von dem Stützring 54 und dem darüber liegenden Mündungsabschnitt 21 abgeschirmt werden. Wie dargestellt, werden die Vorformlinge unterhalb ihrer Stützringe 54 über einen Winkelbereich von 180° umgriffen, sodass mittels der Strahlungsblenden eine spaltarme Abschirmung der Bereiche oberhalb der Stützringe 54 ermöglicht ist.

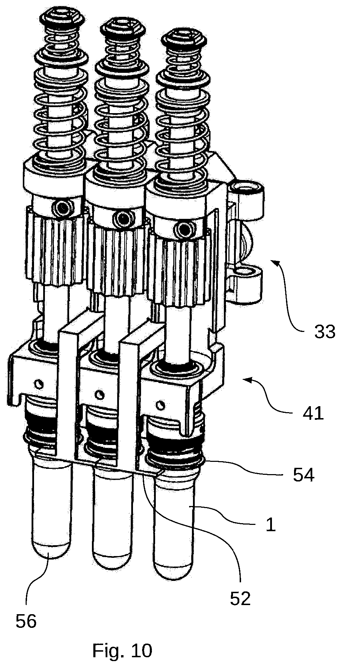

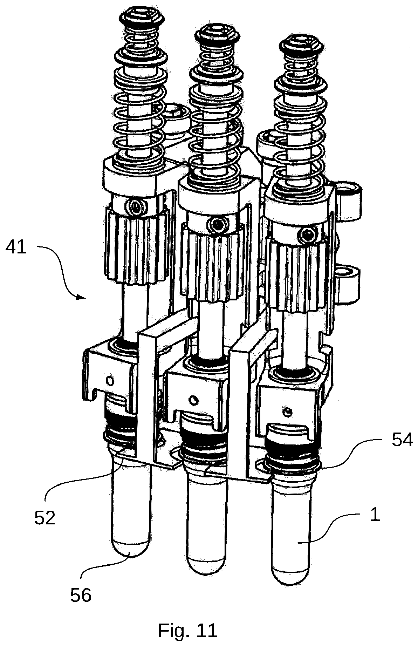

Die Figuren 10 und 11 zeigen die Transportkettenteile 33 aus den Figuren 7 und 8 jeweils in einer geänderten Perspektive zur besseren Veranschaulichung der Strahlungsblendenposition während einer geradlinigen Kettenführung und einer Kurvenführung.

In den perspektivischen Darstellungen der Figuren 7, 8 und 9 sind Steuerrollen 57 erkennbar, die zur Führung der Transportmittel 33 mit einer Steuerkurve (nicht dargestellt) der Heizvorrichtung H zusammenwirken. Mittels der Steuerrollen 57 wird die Bewegungsbahn der Transportdorne 41 und den daran gehaltenen Vorformlingen 1 entlang des Transportweges 55 bestimmt.

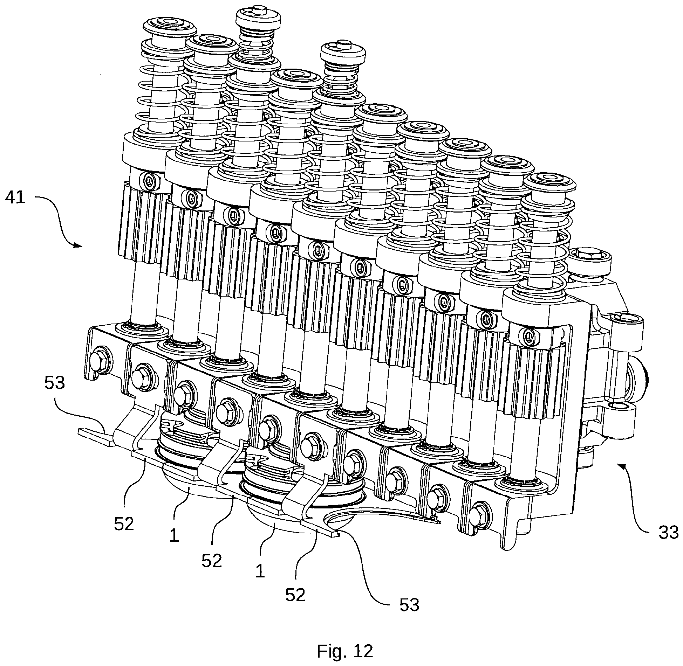

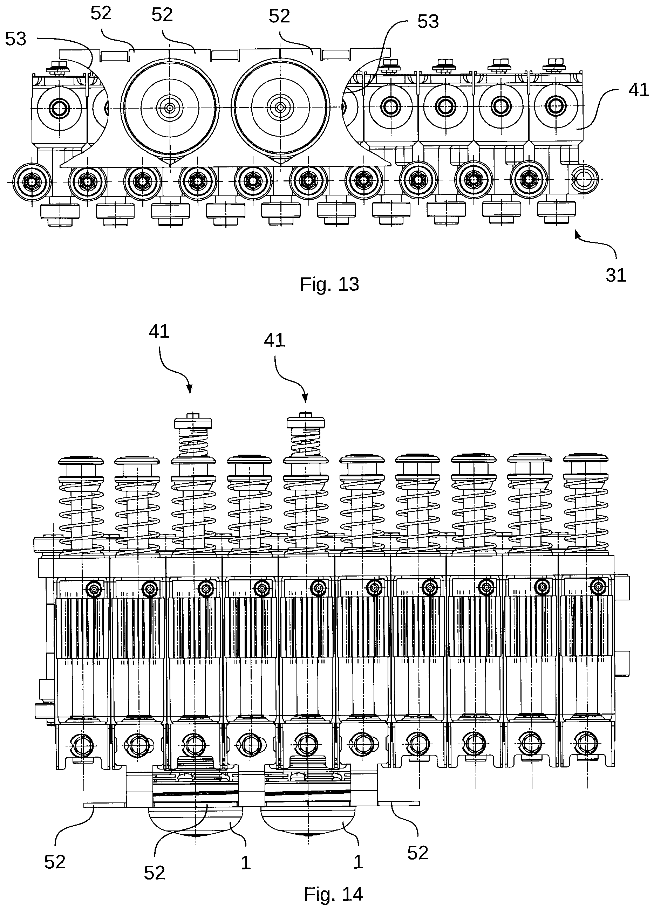

Die Figuren 12 - 14 zeigen ein weiteres Ausführungsbeispiel erfindungsgemäßer Transportmittel 33 mit daran getragenen Handhabungsmitteln 41. Im Gegensatz zur Ausführungsform der Figuren 7 - 11 sind die Strahlungsblenden 52 unmittelbar an den Transportdornen 41 befestigt. Die Strahlungsblenden 52 sind jeweils über einen Haltearm frontseitig an den Transportdornen 41 unbeweglich gehaltert. Vorzugsweise sind die Strahlungsblenden 52 lösbar an den Transportdornen befestigt, um einen einfachen Austausch zu ermöglichen. Fig. 12 ist eine perspektivische Ansicht von hintereinander angeordneten Transportdornen 41 bei einer geradlinigen Führung. Deutlich zu erkennen sind die an den Transportdornen 41 gehalterten Strahlungsblenden 52 und in die Strahlungsblenden 52 eingearbeitete Rezesse 53. Fig. 13 ist eine Draufsicht auf die Transportdorne 41 mit den Strahlungsblenden 53 aus Fig. 12 von unten. Fig. 14 ist eine Seitenansicht der Transportdorne 41 mit den Strahlungsblenden 53 aus Fig. 12 mit Blick auf die Vorderseite der Transportdorne 41.

Beim Wegschwenken eines Transportdorns 41 während einer Kurvenführung der Transportmittel 33 wird ein Transportdorn 41 von seinem in Transportvorrichtung nachfolgenden Transportdorn 41 weggeschwenkt. Dabei wird eine an dem wegschwenkenden Transportdorn 41 befestigte Strahlungsblende 52 zwangsgeführt von dem nachfolgenden Vorformling 1 entfernt. Die Strahlungsblende 52 befindet sich in einer Offenstellung. Dabei entsteht eine Lücke zwischen Strahlungsblende 52 und Vorformling 1, die zum ungestörten Herausführen des Vorformlings nach unten genutzt werden kann. Analog kann bei einer Kurvenfahrt die entstehende Lücke zum Aufnehmen eines Vorformlings 1 genutzt werden.

Bei einer sich der Kurvenführung anschließenden gradlinigen Führung wird die bei der Kurvenfahrt erzielte Öffnung zweier aufeinanderfolgender Strahlungsblenden 52 wieder geschlossen, sodass ein zwischen den Strahlungsblenden 52 befindlicher Vorformling unterhalb seines Stützrings 54 von den zueinander weisenden Rezessen 53 überlappt wird. Die Strahlungsblende 52 befindet sich in einer Geschlossenstellung. Bei der Durchquerung eines Heiztunnels kann in der Geschlossenstellung eine effektive Abschirmung der Stützringe 54 und der oberhalb der Stützringe 54 befindlichen Mündungsabschnitte 21 erzielt werden.

Bei dem Ausführungsbeispiel aus den Figuren 12 - 14 wird nur jeder zweite Transportdorn 41 zur Handhabung eines Vorformlings 1 genutzt. Die Transportdorne 41 zwischen den zur Handhabung von Vorformlingen 1 vorgesehenen Transportdornen 41 dienen der Halterung der Strahlungsblenden 52. Diese Leerdorne sind Platzhalter, ohne dass ihnen die Funktion zur Handhabung von Vorformlingen zukommt. In einer Abwandlung kann auch vorgesehen sein, dass zwischen zwei für die Handhabung von Vorformlingen 1 vorgesehenen Transportdornen 41 zwei oder mehr als zwei Transportdorne 41 als Leerdorne oder Kettenglieder 33 als Leerglieder ohne Haltemittel angeordnet sind.

Wie insbesondere in der perspektivischen Ansicht der Figur 12 und der Seitenansicht in Figur 14 erkennbar, ist der Durchmesser der an den Transportdornen 41 mit Tragfunktion gehaltenen Vorformlingen 1 größer als die Breite der Transportdorne 41. Zwei nebeneinander angeordnete Tragdorne 41 können somit nicht zur Handhabung jeweils eines Vorformlings 1 dienen.

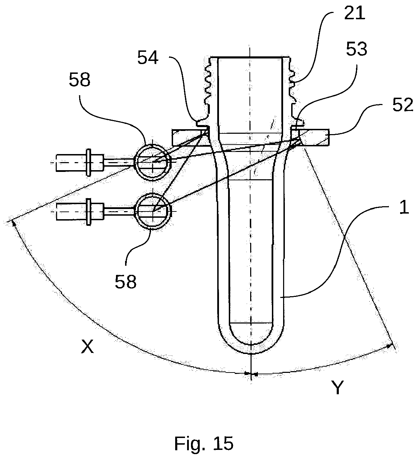

Figur 15 ist eine Schnittdarstellung mit Blick in Transportrichtung auf einen im Vordergrund dargestellten Vorformling 1 und auf eine erfindungsgemäße Strahlungsblende 52, die den Vorformling 1 im Hintergrund gezeigt unterhalb des Stützrings 54 umgreift. Die Strahlungsblende 52 überlappt erfindungsgemäß vorformlingskörperseitig mit dem Stützring 54.

In diesem Ausführungsbeispiel der erfindungsgemäßen Strahlungsblende 52 ist vorgesehen, dass der Rezess 53 eine vorformlingskörperseitige Fase mit einem asymmetrischen Steigungsprofil aufweist.

Seitlich des Vorformlings sind rein schematisch Wärmestrahler 58 in Schnittdarstellung gezeigt. Die Wärmestrahler 58 können Teil eines aus dem Stand der Technik hinlänglich bekannten Heizkastens sein (nicht dargestellt), zu dem an dieser Stelle keine weiteren Ausführungen gemacht werden sollen.

Die in Fig. 15 erkennbaren Winkelbereiche X und Y zeigen jeweils einen Winkel der Fase entlang des vorformlingskörperseitigen Randbereiches des Rezesses 53 gegenüber der Längsachse des Vorformlings 1. Deutlich erkennbar ist der Fasenwinkel Y auf der den Wärmestrahlern 58 gegenüberliegenden Seite des Vorformlings 1 kleiner als der Fasenwinkel X auf der den Wärmestrahlern 58 zugewandten Seite des Vorformlings 1.

Durch den sich über den Verlauf des Randbereiches verändernden Fasenwinkel entsteht ein asymmetrisches Fasenprofil des Rezesses 53. Auf der den Wärmestrahlern 58 gegenüberliegenden Seite ist die Fase mit großer Steilheit in den Randbereich des Rezesses 53 eingearbeitet. Die von den Wärmestrahlern 58 emittierte Wärmestrahlung durchtritt den Vorformling 1, trifft auf die steile Fasenfläche des Rezesses 53 und wird in vorteilhafter Weise in den Wandbereich des Vorformlings 1 unmittelbar unterhalb des Stützrings 54 zurückreflektiert. Mit der geeigneten Wahl des Winkels Y kann die Ausbildung des Temperaturprofils unmittelbar unterhalb des Stützrings 54 in vorteilhafter Weise nach Bedarf beeinflusst werden.

Die besonders flach verlaufende Fase mit dem Winkel X auf der den Wärmestrahlern 58 zugewandten Seite des Vorformlings 1 sorgt für ein gezieltes Durchlassen von ansonsten mit der Strahlungsblende 52 abgeblendeter Heizstrahlung in den Wandbereich des Vorformlings 1 unmittelbar unterhalb des Stützrings 54, wodurch das Temperaturprofil in diesem Bereich ebenfalls vorteilhaft nach Bedarf beeinflusst werden kann.

### Bezugszeichenliste

- 1: Vorformling
- 2: Behälter
- 3: Blasstation
- 4: Blasform
- 5: erste Formhälfte
- 6: zweite Formhälfte
- 7: Bodenteil
- 8: Hubvorrichtung
- 9: Halteelement
- 10: Anschlusskolben
- 11: Reckstange
- 12: Zylinder
- 13: Primärzylinder
- 14: Boden
- 15: Schlitten
- 16: Sekundärzylinder
- 17: Führungsrolle
- 18: Führungselement
- 19: erster Träger
- 20: zweiter Träger
- 1: Vorformling
- 2: Behälter
- 3: Blasstation
- 4: Blasform
- 5: erste Formhälfte
- 6: zweite Formhälfte
- 7: Bodenteil
- 8: Hubvorrichtung
- 9: Halteelement
- 10: Anschlusskolben
- 11: Reckstange
- 12: Zylinder
- 13: Primärzylinder
- 14: Boden
- 15: Schlitten
- 16: Sekundärzylinder
- 17: Führungsrolle
- 18: Führungselement
- 19: erster Träger
- 20: zweiter Träger
- 21: Mündungsabschnitt
- 22: Gewindeeinsatz
- 23: Behälterblase
- 24: Heizstrecke
- 25: Blasrad
- 26: Vorformlingseingabe
- 27: Übergaberad
- 28: Übergaberad
- 29: Übergaberad
- 30: Heizstrahler
- 31: Gebläse
- 32: Ausgabestrecke
- 33: Transportmittel
- 34: Umlenkrad
- 35: Übergaberad
- 36: Umlenkrad
- 37: Übergaberad
- 38: Übergaberad
- 39: Kühlluftkanal
- 40: Verriegelungseinrichtung
- 41: Haltevorrichtung
- 42: Elementbasis
- 43: Kopf der Haltevorrichtung
- 44: Schaft
- 45: Längsachse
- 46: Feder
- 47: Oberseite der Elementbasis
- 48: Endsegment
- 49: Vertiefungen
- 50: Klemmelemente
- 51: Kühlkörper
- 52: Strahlungsblende
- 53: Rezess in der Strahlungsblende
- 54: Stützring
- 55: Transportweg
- 56: Bodenabschnitt
- 57: Steuerrolle
- 58: Wärmestrahler

- B: Blasstation
- H: Heizvorrichtung

## Patentansprüche

1. Heizvorrichtung (H) mit Vorformlingen und mit einer Heizstrecke (24) zur thermischen Konditionierung von diesen, aus thermoplastischem Material bestehenden Vorformlingen (1) mit einem oberen, eine Öffnung aufweisenden Mündungsabschnitt (21), einem unterhalb des Mündungsabschnitts (21) angeordneten kragenartigen Stützrings (54) und einem am unteren Ende geschlossenen Bodenabschnitts (56) auf ein für eine Blasformung geeignetes Temperaturprofil, wobei die Heizvorrichtung (H) Transportmittel (33) zum Transport der Vorformlinge (1) entlang eines Transportweges (55) der Heizvorrichtung (H) aufweist, und wobei die Transportmittel (33) jeweils mindestens ein Handhabungsmittel (41) zum Halten und Hantieren der Vorformlinge (1) tragen, wobei die Handhabungsmittel (41) als Transportdorne ausgebildet sind, wobei in einem Zwischenraum zwischen zwei, jeweils zur Hantierung eines Vorformlings (1) vorgesehenen Handhabungsmitteln (41) eine, zwangsgeführt dem Transportweg der Vorformlinge (1) folgende Strahlungsblende (52) angeordnet ist, die zumindest an einer Stirnseite einen Rezess (53) zum partiellen Umgriff eines in dem zu dem Rezess (53) angrenzenden Handhabungsmittel (41) gehaltenen Vorformlings (1) aufweist, **dadurch gekennzeichnet, dass** die Strahlungsblende (52) derart angeordnet ist, dass ein Flächenbereich der Strahlungsblende (52) zumindest zeitweise während des Transports der Vorformlinge (1) in Längsrichtung des Vorformlings (1) gesehen auf seiner dem Mündungsabschnitt (21) abgewandten Seite mit einem Flächenbereich des Stützring (54) überlappt.

2. Heizvorrichtung (H) nach Anspruch 1, **dadurch gekennzeichnet, dass** die Strahlungsblende (52) in eine den Stützring (54) lateral freigebende Offenstellung und eine den Stützring (54) untergreifende Geschlossenstellung bewegbar ist.

3. Heizvorrichtung (H) nach einem der Ansprüche 1 oder 2, **dadurch gekennzeichnet, dass** die Strahlungsblende (52) höhenverstellbar ausgebildet ist.

4. Heizvorrichtung (H) nach einem der vorangegangenen Ansprüche, **dadurch gekennzeichnet, dass** die Strahlungsblende (52) vorformlingskörperseitig eine die Strahlungswärme reflektierende Oberfläche aufweist.

5. Heizvorrichtung (H) nach einem der vorangegangenen Ansprüche, **dadurch gekennzeichnet, dass** die Heizvorrichtung eine Kühleinrichtung aufweist mittels der die Strahlungsblende (52) mit einem Kühlgas beaufschlagbar ist.

6. Heizvorrichtung (H) nach einem der vorangegangenen Ansprüche, **dadurch gekennzeichnet, dass** die Strahlungsblende (52) zwei Rezesse (53) zum partiellen Umgriff jeweils eines Vorformlings (1) aufweist.

7. Heizvorrichtung (H) nach einem der vorangegangenen Ansprüche, **dadurch gekennzeichnet, dass** der Rezess (53) einen Vorformling (1) über einen Winkelbereich von 160° bis 180° umgreift.

8. Heizvorrichtung (H) nach einem der vorangegangenen Ansprüche, **dadurch gekennzeichnet, dass** die Strahlungsblende (52) an einem Handhabungsmittel (41) oder an einem ein Handhabungsmittel (41) tragendes Transportmittel (33) gehaltert ist.

9. Heizvorrichtung (H) nach einem der vorangegangenen Ansprüche, **dadurch gekennzeichnet, dass** der vorformlingskörperseitige Randbereich der in die Strahlungsblende eingearbeiteten Rezesse eine Fase aufweist, die eine sich über den Verlauf des Randbereiches verändernde Steigung aufweist.

10. Heizvorrichtung (H) nach Anspruch einem der vorhergehenden Ansprüche, **dadurch gekennzeichnet, dass** die Transportdorne jeweils einen Tragekopf (43) zum Festhalten eines Vorformlings (1) in seinem Mündungsbereich (21) aufweisen.

11. Heizvorrichtung (H) nach Anspruch 10, **dadurch gekennzeichnet, dass** die Trageköpfe (43) in lotrechter Richtung im unteren Endbereich des jeweiligen Transportdorns angeordnet sind, wobei die Trageköpfe (43) insbesondere derart ausgebildet sind, dass sie zur Halterung des Vorformlings (1) in die Mündungsöffnung des Vorformlings (1) hineingreifen und den Vorformling (1) klemmend festhalten.

12. Blasmaschine (B) aufweisend eine Heizvorrichtung (H) mit Vorformlingen nach einem der vorangegangenen Ansprüche 1 bis 11.

13. Verwendung einer Heizvorrichtung (H) für die Temperierung von Vorformlingen, die Heizvorrichtung aufweisend eine Heizstrecke (24) zur thermischen Konditionierung von diesen, aus thermoplastischem Material bestehenden Vorformlingen (1) mit einem oberen, eine Öffnung aufweisenden Mündungsabschnitt (21), einem unterhalb des Mündungsabschnitts (21) angeordneten kragenartigen Stützrings (54) und einem am unteren Ende geschlossenen Bodenabschnitts (56) auf ein für eine Blasformung geeignetes Temperaturprofil, wobei die Heizvorrichtung (H) Transportmittel (33) zum Transport der Vorformlinge (1) entlang eines Transportweges (55) der Heizvorrichtung (H) aufweist, und wobei die Transportmittel (33) jeweils mindestens ein Handhabungsmittel (41) zum Halten und Hantieren der Vorformlinge (1) tragen, wobei die Handhabungsmittel (41) als Transportdorne ausgebildet sind, wobei in einem Zwischenraum zwischen zwei, jeweils zur Hantierung eines Vorformlings (1) vorgesehenen Handhabungsmitteln (41) eine, zwangsgeführt dem Transportweg der Vorformlinge (1) folgende Strahlungsblende (52) angeordnet ist, die zumindest an einer Stirnseite einen Rezess (53) zum partiellen Umgriff eines in dem zu dem Rezess (53) angrenzenden Handhabungsmittel (41) gehaltenen Vorformlings (1) aufweist, **dadurch gekennzeichnet, dass** die Strahlungsblende (52) derart angeordnet ist, dass ein Flächenbereich der Strahlungsblende (52) zumindest zeitweise während des Transports der Vorformlinge (1) in Längsrichtung des Vorformlings (1) gesehen auf seiner dem Mündungsabschnitt (21) abgewandten Seite mit einem Flächenbereich des Stützring (54) überlappt.

14. Verwendung nach Anspruch 13, die Heizvorrichtung weiter **gekennzeichnet durch** die kennzeichnenden Merkmale nach einem der Ansprüche 2-11.

## Claims

1. Heating device (H) with preforms and with a heating section (24) for the thermal conditioning of these preforms (1) made of thermoplastic material with an upper orifice section (21) with one opening, a collar-like support ring (54) arranged below the orifice section (21) and a base section closed at the lower end (56) at a temperature profile suitable for blow moulding, wherein the heating device (H) comprises means of transport (33) for transporting the preforms (1) along a transport path (55) of the heating device (H), and wherein the means of transport (33) each bear at least one handling means (41) for holding and handling the preforms (1), wherein the handling means (41) are designed as transport mandrels, wherein, in an intermediate space between two handling means (41), each intended for handling a preform (1), a radiation shield (52) following the transport path of the preforms (1) in a forcibly guided manner is arranged, which comprises a recess (53) at least on one front side for partially engaging around a preform (1) held in the handling means (41) adjacent to the recess (53), **characterized in that** the radiation shield (52) is arranged in such a way that a surface area of the radiation shield (52) overlaps with a surface area (54) of the support ring at least temporarily during the transport of the preforms (1) viewed in the longitudinal direction of the preform (1) on its side facing away from the orifice section (21).

2. Heating device (H) according to Claim 1, **characterized in that** the radiation shield (52) can be moved into an open position laterally releasing the support ring (54) and into a closed position engaging underneath the support ring (54).

3. Heating device (H) according to any one of the Claims 1 or 2, **characterized in that** the radiation shield (52) is height adjustable.

4. Heating device (H) according to any one of the preceding claims, **characterized in that** the radiation shield (52) comprises a surface reflecting the radiant heat on the preform body side.

5. Heating device (H) according to any one of the preceding claims, **characterized in that** the heating device comprises a cooling device, by means of which a cooling gas can be applied to the radiation shield (52).

6. Heating device (H) according to any one of the preceding claims, **characterized in that** the radiation shield (52) comprises two recesses (53) in order to respectively partially engage around a preform (1).

7. Heating device (H) according to any one of the preceding claims, **characterized in that** the recess (53) engages around a preform (1) across an angular range of 160° to 180°.

8. Heating device (H) according to any one of the preceding claims, **characterized in that** the radiation shield (52) is supported on a handling means (41) or on a means of transport (33) bearing a handling means (41).

9. Heating device (H) according to any one of the preceding claims, **characterized in that** the preform-body-side edge region of the recesses incorporated into the radiation shield comprises a chamfer that has a gradient that varies across the course of the edge region.

10. Heating device (H) according to claim one of the preceding claims, **characterized in that** the transport mandrels each comprise a bearing head (43) for firmly holding a preform (1) in its orifice region (21).

11. Heating device (H) according to Claim 10, **characterized in that** the bearing heads (43) are arranged in a perpendicular direction in the lower end region of the respective transport mandrel, wherein the bearing heads (43) are, in particular, designed in such a way that they engage into the orifice opening of the preform (1) to supporting the preform (1), thereby firmly holding the preform (1) in a clamping manner.

12. Blow moulding machine (B) comprising a heating device (H) with preforms according to any one of the preceding Claims 1 to 11.

13. Utilization of a heating device (H) for the temperature conditioning of preforms with the heating device comprising a heating section (24) for the thermal conditioning of these preforms (1) made of thermoplastic material with an upper orifice section (21) with one opening, a collar-like support ring (54) arranged below the orifice section (21) and a base section closed at the lower end (56) at a temperature profile suitable for blow moulding, wherein the heating device (H) comprises means of transport (33) for transporting the preforms (1) along a transport path (55) of the heating device (H), and wherein the means of transport (33) each bear at least one handling means (41) for holding and handling the preforms (1), wherein the handling means (41) are designed as transport mandrels, wherein, in an intermediate space between two handling means (41), each intended for handling a preform (1), a radiation shield (52) following the transport path of the preforms (1) in a forcibly guided manner is arranged, which comprises a recess (53) at least on one front side for partially engaging around a preform (1) held in the handling means (41) adjacent to the recess (53), **characterized in that** the radiation shield (52) is arranged in such a way that a surface area of the radiation shield (52) overlaps with a surface area (54) of the support ring at least temporarily during the transport of the preforms (1) viewed in the longitudinal direction of the preform (1) on its side facing away from the orifice section (21).

14. Utilization according to Claim 13, the heating device being further **characterized by** the characterizing features according to any one of the Claims 2-11.

## Revendications

1. Dispositif de chauffage (H) avec des préformes et une section de chauffage (24) pour le conditionnement thermique desdites préformes (1) en matériau thermoplastique, lesquelles comportent une section d'embouchure (21) supérieure présentant une ouverture, une collerette d'appui (54) disposée sous la section d'embouchure (21), et une section de fond (56) fermée à son extrémité inférieure, le dispositif de chauffage (H) permettant d'obtenir un profil de températures approprié au moulage par soufflage et présentant des moyens de transport (33) pour le transport des préformes (1) le long d'un parcours (55) du dispositif de chauffage (H), les moyens de transport (33) présentant respectivement au moins un moyen de manipulation (41) pour maintenir et manipuler les préformes (1), les moyens de manipulation (41) étant réalisés sous forme de mandrins de transport, un écran thermique (52) suivant par guidage forcé le parcours des préformes (1) étant agencé dans un espace intercalaire entre deux moyens de manipulation (41) respectivement prévus pour manipuler une préforme (1) et présentant sur au moins un côté frontal un retrait (53) pour entourer partiellement une préforme (1) maintenue par le moyen de manipulation (41) contigu au retrait (53), **caractérisé en ce que** l'écran thermique (52) est disposé de façon à ce qu'une zone de la surface de l'écran thermique (52) chevauche avec son côté opposé à la section d'embouchure (21), vu en sens longitudinal de la préforme (1), une zone de surface de la collerette d'appui (54) temporairement au moins pendant le transport des préformes (1).

2. Dispositif de chauffage (H) selon la revendication 1, **caractérisé en ce que** l'écran thermique (52) peut être placé en une position ouverte libérant latéralement la collerette d'appui (54) et une position fermée maintenant la collerette d'appui (54) par en dessous.

3. Dispositif de chauffage (H) selon l'une des revendications 1 ou 2, **caractérisé en ce que** l'écran thermique (52) est conçu de façon à être réglable en hauteur.

4. Dispositif de chauffage (H) selon l'une des revendications précédentes, **caractérisé en ce que** l'écran thermique (52) présente du côté du corps de la préforme une surface réfléchissant la chaleur rayonnante.

5. Dispositif de chauffage (H) selon l'une des revendications précédentes, **caractérisé en ce que** le dispositif de chauffage présente un dispositif de refroidissement au moyen duquel l'écran thermique (52) peut être soumis à l'action d'un gaz réfrigérant.

6. Dispositif de chauffage (H) selon l'une des revendications précédentes, **caractérisé en ce que** l'écran thermique (52) présente deux retraits (53) pour entourer partiellement respectivement une préforme (1).

7. Dispositif de chauffage (H) selon l'une des revendications précédentes, **caractérisé en ce que** le retrait (53) entoure une préforme (1) sur un angle de 160° à 180°.

8. Dispositif de chauffage (H) selon l'une des revendications précédentes, **caractérisé en ce que** l'écran thermique (52) est maintenu au niveau d'un moyen de manipulation (41) ou d'un moyen de transport (33) portant un moyen de manipulation (41).

9. Dispositif de chauffage (H) selon l'une des revendications précédentes, **caractérisé en ce que** la zone périphérique du côté du corps de la préforme des retraits pratiqués dans l'écran thermique présente sur l'étendue de la zone périphérique un chanfrein d'inclinaison variable.

10. Dispositif de chauffage (H) selon l'une des revendications précédentes, **caractérisé en ce que** les mandrins de transport présentent respectivement une tête porteuse (43) pour maintenir une préforme (1) par sa section d'embouchure (21).

11. Dispositif de chauffage (H) selon la revendication 10, **caractérisé en ce que** les têtes porteuses (43) sont agencées verticalement dans la section d'extrémité inférieure du mandrin de transport, les têtes porteuses (43) étant notamment conçues pour pouvoir être introduites dans l'embouchure de la préforme (1) pour maintenir la préforme (1) par coinçage.

12. Machine de moulage par soufflage (B) présentant un dispositif de chauffage (H) avec des préformes selon l'une des revendications précédentes 1 à 11.

13. Utilisation d'un dispositif de chauffage (H) pour le conditionnement thermique de préformes, le dispositif de chauffage présentant une section de chauffage (24) pour le conditionnement thermique desdites préformes (1) en matériau thermoplastique, lesquelles comportent une section d'embouchure (21) supérieure présentant une ouverture, une collerette d'appui (54) disposée sous la section d'embouchure (21), et une section de fond (56) fermée à son extrémité inférieure, le dispositif de chauffage (H) permettant d'obtenir un profil de températures approprié au moulage par soufflage et présentant des moyens de transport (33) pour le transport des préformes (1) le long d'un parcours (55) du dispositif de chauffage (H), les moyens de transport (33) présentant respectivement au moins un moyen de manipulation (41) pour maintenir et manipuler les préformes (1), les moyens de manipulation (41) étant réalisés sous forme de mandrins de transport, un écran thermique (52) suivant par guidage forcé le parcours des préformes (1) étant agencé dans un espace intercalaire entre deux moyens de manipulation (41) respectivement prévus pour manipuler une préforme (1) et présentant sur au moins un côté frontal un retrait (53) pour entourer partiellement une préforme (1) maintenue par le moyen de manipulation (41) contigu au retrait (53), **caractérisé en ce que** l'écran thermique (52) est disposé de façon à ce qu'une zone de la surface de l'écran thermique (52) chevauche avec son côté opposé à la section d'embouchure (21), vu en sens longitudinal de la préforme (1), une zone de surface de la collerette d'appui (54) temporairement au moins pendant le transport des préformes (1).

14. Utilisation selon la revendication 13, le dispositif de chauffage étant en outre **caractérisé par** les caractéristiques caractérisantes selon l'une des revendications 2 à 11.
